# EUROPEAN PATENT SPECIFICATION

(11) **EP 4 598 977 B1**
(45) Date of publication and mention of the grant of the patent: **22.07.2026**
(21) Application number: 23752101.8
(22) Date of filing: 18.07.2023
(51) Int. Cl.: C08G 59/68, C08G 59/50

(54) **TWO-COMPONENT ADHESIVE COMPOSITION**
ZWEIKOMPONENTEN-KLEBSTOFFZUSAMMENSETZUNG
COMPOSITION ADHÉSIVE À DEUX COMPOSANTS

(30) Priority: 06.10.2022 US 202263413817 P
(43) Date of publication of application: 13.08.2025
(73) Proprietor: DDP Specialty Electronic Materials US, LLC, Wilmington, Delaware 19805 (US)
(72) Inventor: GRUNDER, Sergio, 8807 Freienbach (CH); UZUNSKA, Maria, 8807 Freienbach (CH); SCHNEIDER, Daniel, 8807 Freienbach (CH); KOCH, Felix, 8807 Freienbach (CH)
(74) Representative: Abitz & Partner
(86) International application number: PCT/US2023/027994
(87) International publication number: WO 2024/076408

(56) References cited:
- WO-A1-2022/056096

## Description

### Field of Invention

The present invention relates to the field of thermally-conductive two-component adhesive compositions.

### Background of the Invention

The automotive industry has seen a trend to reduce the weight of vehicles in the past decade. This light-weighting trend has been mainly driven by regulations to reduce CO₂ emissions of the vehicle fleet. In recent years lightweight construction strategies have been further fueled by the increasing number of electrically powered vehicles.

To provide long driving ranges, batteries with a high energy density are needed. Several battery strategies are currently followed with differing detailed concepts, but what all long range durable battery concepts have in common is that a thermal management is needed, to deal with the heat generated during charging and de-charging of batteries.

To thermally connect battery cells or modules to a cooling system, thermal interface materials and/or thermally-conductive adhesives are needed. The cells need to be kept in the optimum operating temperature range (preferably 25-40°C) to avoid losing efficiency, and to avoid the start of a dangerous thermal runaway reaction. Active cooling is increasingly used, for example, cooled water-glycol mixtures are pumped through channels that cool the metal bottom plate on which the battery cells/modules are placed. The cells or arrays of cells can be bonded with thermally-conductive adhesives directly to the cooling plate. This offers not only good mechanical fixation of the cells, but also a thermal connection. TIM's and thermally-conductive adhesives typically have their good thermal properties due to high loadings of thermally-conductive fillers, such as aluminium trihydroxide (ATH).

A common way to assemble large batteries was to arrange battery cells into modules, and then place the modules in a battery pack. A thermal interface material (TIM) is placed between the module and the cooling plate. The modules are typically fixed with screws or other mechanical methods as the TIM provides mainly thermal-conductivity, and very little structural support. One way to increase the energy density is to eliminate the module level and bond the cells directly on the cooling plate in what is referred to as the cell-to-pack (CTP) approach. As the single cells cannot be manually fixed, the TIM now needs to fulfil a structural role as well as a thermal one. This has led to what is known as structural TIM's or thermally-conductive adhesives.

The requirements of thermally-conductive adhesives are manifold, but principal is a thermal conductivity of 1.5 W/mK or greater, and a lap shear strength of greater than 4 MPa. The cooling plate, and often also the cells, are made of aluminium, meaning good adhesion to aluminium is crucial.

Polyurethanes have been used as thermally-conductive adhesives, however, they suffer from poor adhesion to untreated aluminium and compromised shelf-life in the presence of high loadings of thermally-conductive fillers, in particular ATH.

WO 2022/056096 A1 describes a kit for a two-component thermally conductive adhesive formulation comprising (A) a first part, comprising a blocked polyurethane prepolymer which is the reaction product of a polyisocyanate with a phenol; an aromatic epoxy resin; an epoxy silane; and (B) a second part, comprising a nucleophilic cross-linker capable of reacting with the blocked polyurethane prepolymer, which may be a polyamine, and the aromatic epoxy resin; and a catalyst, wherein Part (A) and/or Part (B) further comprise a thermally conductive filler, and parts (A) and (B) are designed to be blended together prior to use

It is known to make analogues of polyurethanes by replacing the terminal NCO groups in a conventional polyurethane prepolymer with a moiety derived by reacting the terminal NCO groups with a molecule such as ethyl 2-oxocyclopentane-1-carboxylate (CPEE). Such prepolymers avoid the use of NCO-terminated compounds by the end-user, however, they often suffer from reduced strength after curing, particularly when used in thermally-conductive adhesives, where high loadings of filler are used.

There is ongoing need for alternatives to polyurethane systems that show excellent cured strength even with high filler loadings.

### Summary of the Invention

In a first aspect, the invention provides a two-part, thermally-conductive adhesive comprising:
(A) a first part (Part A) comprising:
   (a1) at least one compound of general Formula I: 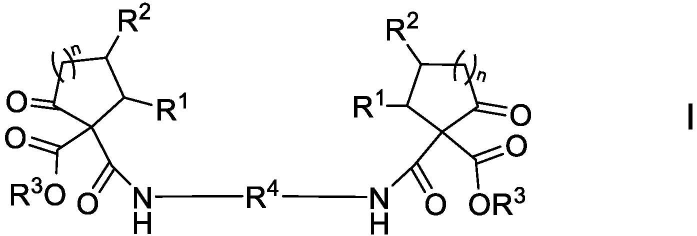
   where R¹ and R² are independently selected from hydrogen and C₁ to C₆ alkyl, n is an integer from 1 to 2, R³ is C₁ to C₆ alkyl, and R⁴ is a divalent C₄₋₈-alkylene radical with 2-5 C₁₋₃-alkyl substituents on the akylene chain;
   (a2) at least one liquid epoxy resin;
(B) a second part (Part B) comprising:
   (b1) at least one polyamine, having two or more primary or secondary amine functionalities;
wherein at least one of Part A and Part B comprises a thermally-conductive filler such that when Part A and Part B are mixed to form an adhesive mixture, the concentration of thermally-conductive filler in the adhesive mixture is 70 wt% or greater, based on the total weight of the adhesive mixture, and wherein at least one of Part A and Part B comprise a catalyst capable of catalyzing the reaction of an amine with a compound of general Formula I, and wherein Part A and Part B are stored isolated from one another, and are designed to be mixed together to form an adhesive mixture prior to use.

### Detailed Description of the Invention

The inventors have discovered novel monomers of general Formula I for forming polymers, in particular adhesives, on reaction with a polyamine comprising two or more primary or secondary amine groups.

### Definitions and abbreviations

- MDI: Methylenebis(phenyl isocyanate)
- HDI: Hexamethylene diisocyanate
- IPDI: isophorone diisocyanate
- PU: polyurethane
- SEC: size exclusion chromatography
- RH: relative humidity
- PDI: polydispersity index
- TMDI: 2,4,4-trimethylhexamethylene diisocyanate
- CPEE: ethyl 2-oxocyclopentane-1-carboxylate
- RH: relative humidity

Molecular weights of polymers as reported herein are reported in Daltons (Da) as number or weight average molecular weights, as determined by gel permeation chromatography (GPC).

### Compound of general Formula I

In a first aspect, the invention provides a compound of general Formula I: 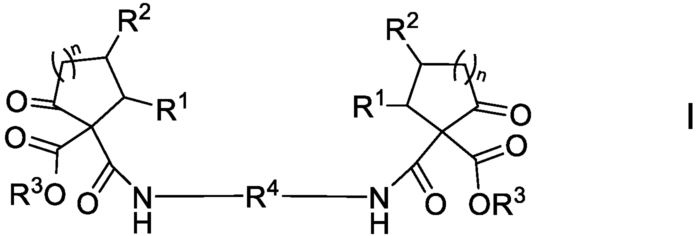 where R¹ and R² are independently selected from hydrogen and C₁ to C₆ alkyl, n is an integer from 1 to 2, R³ is C₁ to C₆ alkyl, and R⁴ is a divalent C₄₋₈-alkylene radical with 2-5 C₁₋₃-alkyl substituents on the akylene chain.

In a preferred embodiment, R¹ and R² are independently selected from H and C₁ to C₄ alkyl, more preferably H and C₁ to C₂ alkyl, particularly preferably R¹ and R² are H.

In a preferred embodiment n is 1.

In a preferred embodiment, R³ is C₁ to C₄ alkyl, more preferably R³ is C₁ to C₂ alkyl, particularly preferably R³ is ethyl.

In a preferred embodiment, R⁴ is a divalent C₆ alkylene radical with 2-5 methyl substituents on the alkylene chain. In a more preferred embodiment, R⁴ is a C₆ alkylene radical with three methyl substituents on the alkylene chain.

In a particularly preferred embodiment, the compound of general Formula I is of Formula I":

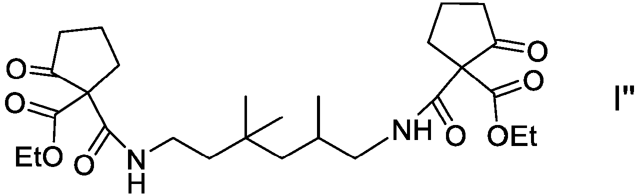

Compounds of general Formula I are made by reacting a diisocyanate of Formula III:

OCN-R⁴ NCO III

where R⁴ is as defined above, including the preferred embodiments, with at least two equivalents of a compound of Formula IV: 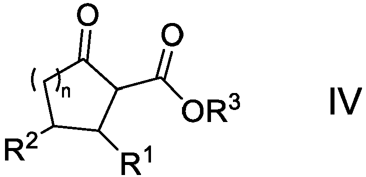 where R¹, R², R³ and n are defined as above, including the preferred embodiments, in the presence of a catalyst capable of catalyzing the reaction between an NCO group and the molecule of general Formula IV. The catalyst is preferably selected from bismuth and/or zinc catalysts. In a preferred embodiment it is selected from bismuth and/or zinc carboxylates. In a particularly preferred embodiment, the catalyst is a mixture of bismuth and zinc carboxylates.

In an example of the synthesis, 2,4,4-Trimethylhexamethylene diisocyanate is reacted with at least two equivalents of a molecule of Formula IV, in the presence of a bismuth and/or zinc catalyst, in particular a mixture of bismuth and/or zinc catalysts:

### At least one liquid epoxy resin

Part A of the adhesive of the invention comprises at least one liquid epoxy resin, by which is meant epoxy resins that are liquid at 23°C. Preferably the liquid epoxy resin has a viscosity at 23°C of not greater than 50 Pas, more preferably not greater than 25 Pas, more particularly preferably not greater than 15 Pas, measured on a Kinexus (Bohlin) equipment using a cone-plate 20 mm diameter geometry (4 ° cone) at 23 °C through shear rate up/down curve from 0.1 - 20 s⁻¹.

The liquid epoxy resin is preferably non-rubber modified.

If only a single epoxy resin is present, it is a liquid at 23°C. If two or more epoxy resins are present, the mixture thereof is a liquid at 23°C, although individual epoxy resins within the mixture may be by themselves solids at 23°C.

A wide range of epoxy resins can be used, including those described at column 2 line 66 to column 4 line 24 of U.S. Patent 4,734,332. The epoxy resin should have an average of at least 1.8, preferably at least 2.0, epoxide groups per molecule. The epoxy equivalent weight may be, for example, 75 to 350, preferably 140 to 250 and in some embodiments 150 to 225. If a mixture of non-rubber-modified epoxy resins is present, the mixture should have an average epoxy functionality of at least 1.8, preferably at least 2.0, and an epoxy equivalent weight as in the previous sentence, and more preferably each epoxy resin in the mixture has such an epoxy functionality and epoxy equivalent weight.

Suitable epoxy resins include diglycidyl ethers of polyhydric phenol compounds such as resorcinol, catechol, hydroquinone, biphenol, bisphenol A, bisphenol AP (1,1-bis(4-hydroxylphenyl)-1-phenyl ethane), bisphenol F, bisphenol K and tetramethylbiphenol; diglycidyl ethers of aliphatic glycols such as the diglycidyl ethers of C2-24 alkylene glycols; polyglycidyl ethers of phenol-formaldehyde novolac resins (epoxy novolac resins), alkyl substituted phenol-formaldehyde resins, phenol-hydroxybenzaldehyde resins, cresol-hydroxybenzaldehyde resins, dicyclopentadiene-phenol resins and dicyclopentadiene-substituted phenol resins; and any combination of any two or more thereof.

Suitable epoxy resins include diglycidyl ethers of bisphenol A resins such as are sold by Olin Corporation under the designations D.E.R.^{®} 330, D.E.R.^{®} 331, D.E.R.^{®} 332, D.E.R.^{®} 383, D.E.R. 661 and D.E.R.^{®} 662 resins.

In a preferred embodiment, the at least one epoxy resin comprises or consists of a reaction product of epichlorohydrin and bisphenol A, having an epoxide equivalent weight of 176-185 g/eq (according to ASTM D-1652), an epoxide percentage of 23.2-24.4 % (according to ASTM D-1652), an epoxide group content of 5,400-5,680 mmol/kg (according to ASTM D-1652), and a viscosity @ 25°C of 7,000-10,000 MPas (according to ASTM D-445).

Epoxy novolac resins can be used. Such resins are available commercially as D.E.N.^{®} 354, D.E.N.^{®} 431, D.E.N.^{®} 438 and D.E.N.^{®} 439 from Olin Corporation.

Other suitable epoxy resins are cycloaliphatic epoxides. A cycloaliphatic epoxide includes a saturated carbon ring having an epoxy oxygen bonded to two vicinal atoms in the carbon ring, as illustrated by the following structure V: 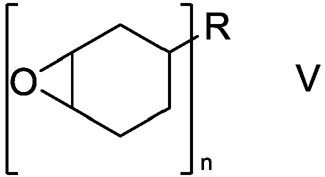 wherein R is an aliphatic, cycloaliphatic and/or aromatic group and n is a number from 1 to 10, preferably from 2 to 4. When n is 1, the cycloaliphatic epoxide is a monoepoxide. Di- or polyepoxides are formed when n is 2 or more. Mixtures of mono-, di- and/or polyepoxides can be used. Cycloaliphatic epoxy resins as described in U.S. Patent No. 3,686,359 may be used in the present invention. Cycloaliphatic epoxy resins of particular interest are (3,4-epoxycyclohexyl-methyl)-3,4-epoxy-cyclohexane carboxylate, bis-(3,4-epoxycyclohexyl) adipate, vinylcyclohexene monoxide and mixtures thereof.

Other suitable epoxy resins include oxazolidone-containing compounds as described in U. S. Patent No. 5,112,932. In addition, an advanced epoxy-isocyanate copolymer such as those sold commercially as D.E.R. 592 and D.E.R. 6508 (Olin Corporation) can be used.

The liquid epoxy resin is preferably present at 2-20 wt%, more preferably 2-10 wt%, particularly preferably 4-8 wt%, based on the total weight of Part A.

The liquid epoxy resin is preferably present at 12-50 wt%, more preferably 15-35 wt%, more particularly preferably 20-30 wt%, based on the total organic content of Part A.

In a preferred embodiment, the at least one epoxy resin comprises a reaction product of epichlorohydrin and bisphenol A, having an epoxide equivalent weight of 176-185 g/eq (according to ASTM D-1652), an epoxide percentage of 23.2-24.4 % (according to ASTM D-1652), an epoxide group content of 5,400-5,680 mmol/kg (according to ASTM D-1652), and a viscosity @ 25°C of 7,000-10,000 MPas (according to ASTM D-445), and is present in Part A at 2-20 wt%, more preferably 2-10 wt%, particularly preferably 4-8 wt%, based on the total weight of Part A.

In another preferred embodiment, the at least one epoxy resin comprises a reaction product of epichlorohydrin and bisphenol A, having an epoxide equivalent weight of 176-185 g/eq (according to ASTM D-1652), an epoxide percentage of 23.2-24.4 % (according to ASTM D-1652), an epoxide group content of 5,400-5,680 mmol/kg (according to ASTM D-1652), and a viscosity @ 25°C of 7,000-10,000 MPas (according to ASTM D-445), and is present in Part A at 12-50 wt%, more preferably 15-35 wt%, more particularly preferably 20-30 wt%, based on the total organic content of Part A.

### Thermally-conductive filler

Part A and/or Part B comprise a thermally-conductive filler.

The thermally-conductive filler is not particularly limited. Suitable thermally-conductive fillers are those that have a coefficient of thermal conductivity that is greater than 5 W/m°K, more preferably greater than 10 W/m°K, or particularly preferably greater than 15 W / m°K. Examples of thermally-conductive fillers include alumina, alumina trihydrate or aluminum trihydroxide (ATH), silicon carbide, boron nitride, diamond, and graphite, and mixtures thereof. Particularly preferred are aluminium trihydroxide (ATH), and aluminium oxide, with ATH being the most preferred. Thermally-conductive fillers may be surface treated or non-treated.

In a preferred embodiment, the thermally-conductive filler has a broad particle size distribution characterized by a ratio of D₉₀ / D₅₀ of at or about 3 or more.

Particularly preferably the thermally-conductive filler is ATH or aluminium oxide having a broad particle size distribution characterized by a ratio of D₉₀ / D₅₀ of at or about 3 or more, most preferably ATH.

Also preferred are thermally-conductive fillers having a bimodal particle size distribution. A bimodal distribution is when, for example, the ratio D₉₀ / D₅₀ is at or about 3 or more, more preferably at or about 5 or more, more particularly preferably at or about 9 or more. For example, particles having a D₅₀ of 5 to 20 microns and a D₉₀ of 70 to 90 microns, particularly a D₅₀ of 7-9 microns and a D₉₀ of 78-82 microns. Particle size can be determined using laser diffraction. For ATH a suitable solvent is deionized water containing a dispersion aid, such as Na₄P₂O₇ x 10 H₂O, preferably at 1 g/l. Preferred are aluminium oxide and ATH having a bimodal distribution, particularly ATH. In a preferred embodiment, the thermally-conductive filler is ATH having D₉₀ / D₅₀ at or about 3 or more, more preferably at or about 5 or more, particularly preferably at or about 9 or more.

In a preferred embodiment, the thermally-conductive filler is bimodally distributed aluminium trihydroxide (ATH), having the following particle size distribution (by laser diffraction in deionized water containing a dispersion aid, such as Na₄P₂O₇ x 10 H₂O, preferably at 1 g/l):
D₁₀ (micron) 0.5
D₅₀ (micron) 8
D₉₀ (micron) 80.

The thermally-conductive filler is preferably present in the final adhesive, resulting from mixing Part A and Part B, at a concentration of 30-85 wt%, more preferably 40-85 wt%, more particularly preferably 60-85 wt%, based on the total weight of the adhesive.

In a preferred embodiment, the thermally-conductive filler is aluminium trihydroxide (ATH), used at a concentration of 30-85 wt%, more preferably 40-85 wt%, more particularly preferably 60-85 wt%, based on the total weight of the adhesive.

In another preferred embodiment, the thermally-conductive filler is bimodally distributed aluminium trihydroxide (ATH), used at a concentration of 30-85 wt%, more preferably 40-85 wt%, more particularly preferably 60-85 wt%, based on the total weight of the adhesive.

In another preferred embodiment, the thermally-conductive filler is aluminium trihydroxide (ATH), having the following particle size distribution (by laser diffraction in deionized water containing a dispersion aid, such as Na₄P₂O₇ x 10 H₂O, preferably at 1 g/l):
D₁₀ (micron) 0.5
D₅₀ (micron) 8
D₉₀ (micron) 80
used at a concentration of 30-85 wt%, more preferably 40-85 wt%, more particularly preferably 60-85 wt%, based on the total weight of the adhesive.

The concentration of thermally-conductive filler in Part A is preferably 30-85 wt%, more preferably 40-85 wt%, more particularly preferably 60-85 wt%, based on the total weight of Part A.

The concentration of thermally-conductive filler in Part B is preferably 30-85 wt%, more preferably 40-85 wt%, more particularly preferably 60-85 wt%, based on the total weight of Part B.

In a preferred embodiment, the thermally-conductive filler is aluminium trihydroxide (ATH), used in Part A and/or Part B at a concentration of 30-85 wt%, more preferably 40-85 wt%, more particularly preferably 60-85 wt%, based on the total weight of Part A or Part B.

In another preferred embodiment, the thermally-conductive filler is ATH having a bimodal particle size, used in Part A and/or Part B at a concentration of 30-85 wt%, more preferably 40-85 wt%, more particularly preferably 60-85 wt%, based on the total weight of Part A or Part B.

In a preferred embodiment, the thermally-conductive filler is aluminium trihydroxide (ATH), having the following particle size distribution (by laser diffraction in deionized water containing a dispersion aid, such as Na₄P₂O₇ x 10 H₂O, preferably at 1 g/l):
D₁₀ (micron) 0.5
D₅₀ (micron) 8
D₉₀ (micron) 80
used in Part A and/or Part B at a concentration of 30-85 wt%, more preferably 40-85 wt%, more particularly preferably 60-85 wt%, based on the total weight of Part A or Part B.

### At least one polyamine

Component B comprises at least one polyamine, having two or more primary or secondary amine groups.

In a preferred embodiment, the at least one polyamine comprises a triamine.

Preferable the at least one polyamine comprises a polyamine having a molecular weight of at least 400 Da, more preferably at least 1,000 Da, more particularly preferably at least 2,000 Da. In a preferred embodiment, the at least one polyamine comprises a polyamine having a molecular weight of 2,000-4,000 Da, more preferably about 3,000 Da.

In another preferred embodiment, the at least one polyamine comprises a polyamine having a molecular weight of at least 300 Da, more preferably at least 350 Da, more particularly preferably at least 400 Da. In a preferred embodiment, the at least one polyamine comprises a polyamine having a molecular weight of 300-500 Da, more preferably about 400-440 Da.

In another preferred embodiment, the polyamine is a triamine having primary amine groups and having a molecular weight of 2,000-4,000 Da, more preferably 3,000 Da.

Examples of suitable compounds having primary and/or secondary amino groups include polyoxyalkylene polyamines having 2 or more amine groups per polyamine, 2 to 4 amine groups per polyamine, or 2 to 3 amine groups per polyamine. Particularly preferred are polyether amines having 3 amine groups.

The polyoxyalkylene poly-amines may have a weight average molecular weight of at least 400 Da, more preferably at least 1,000 Da, more particularly preferably at least 2,000 Da. In a preferred embodiment, the polyoxyalkylene polyamine has a molecular weight of 2,000-4,000 Da, more preferably about 3,000 Da. The polyoxyalkylene polyamine may have a weight average molecular weight of about 5,000 or less or about 3,000 or less.

Exemplary polyoxyalkylene polyamines include:
1. Polyamines based on a propylene oxide polyether backbone. Examples include:
   A trifunctional primary amine having an average molecular weight of approximately 440. Its amine groups are located on secondary carbon atoms at the ends of aliphatic polyether chains:

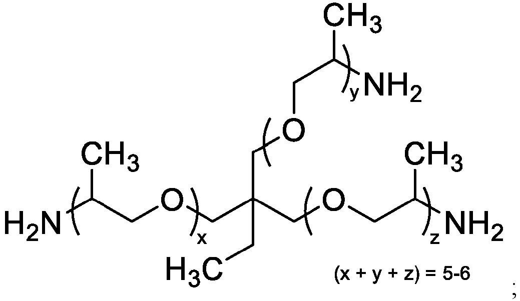

A polypropylene oxide diamine having a molecular weight of about 400:

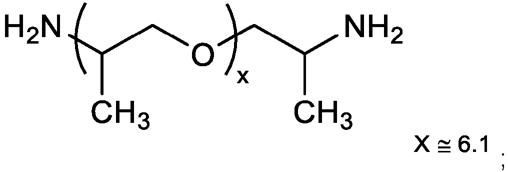

A difunctional, primary amine with average molecular weight of about 2000. The primary amine groups are located on secondary carbon atoms at the end of the aliphatic polyether chains:

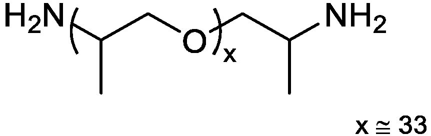

A triamine of approximately 3000 molecular weight, of the formula:

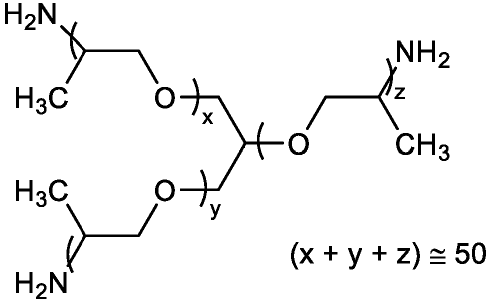

A triamine of approximately 5,000 g/mol, of the formula:

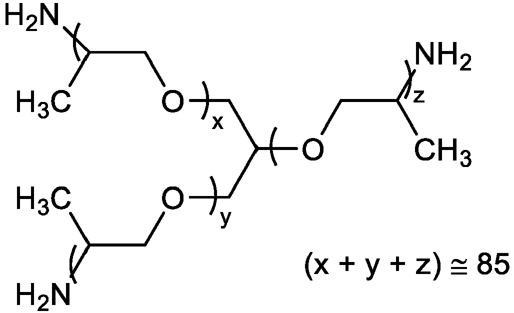

2. Polyamines based predominantly on a polyethylene oxide polyether backbone. Examples are of the general formula:

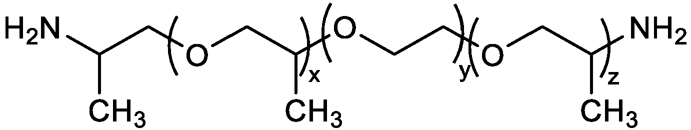

Such as a polyamine of molecular weight 600 g/mol, where y ≈ 9, (x + z) ≈ 3.6;
A polyamine of molecular weight of 900 g/mol, where y ≈ 12.5, (x + z) ≈ 6;
A polyamine of molecular weight 2,000 g/mol, where y ≈ 39, (x + z) ≈ 6;

In a particularly preferred embodiment the at least one polyamine comprises or consists of a triamine of approximately 3000 molecular weight, of the formula:

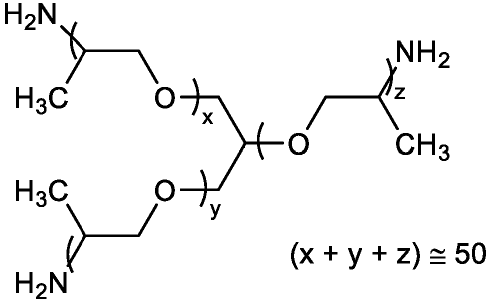

In another preferred embodiment, the at least one polyamine comprises or consist of a polyetheramine triamine of approximately 440 molecular weight, of the following general structure:

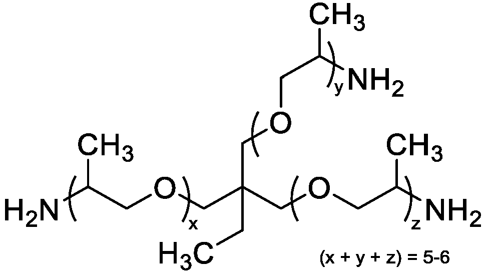

Other suitable polyamines include polyamidoamines, which comprise repetitively branched subunits of amide and amine functionality. For example, suitable polyamidoamines are initiated with ammonia or ethylene diamine, reacted by Michael addition with an acrylate ester (for example methyl acrylate), followed by reaction of the ester functionalities with a diamine (such as ethylene diamine). This results in a primary amine terminated polyamine, which may be again reacted by Michael addition, followed by reaction again with a diamine. The first "cycle" is represented schematically below using ethylene diamine and methyl acrylate:

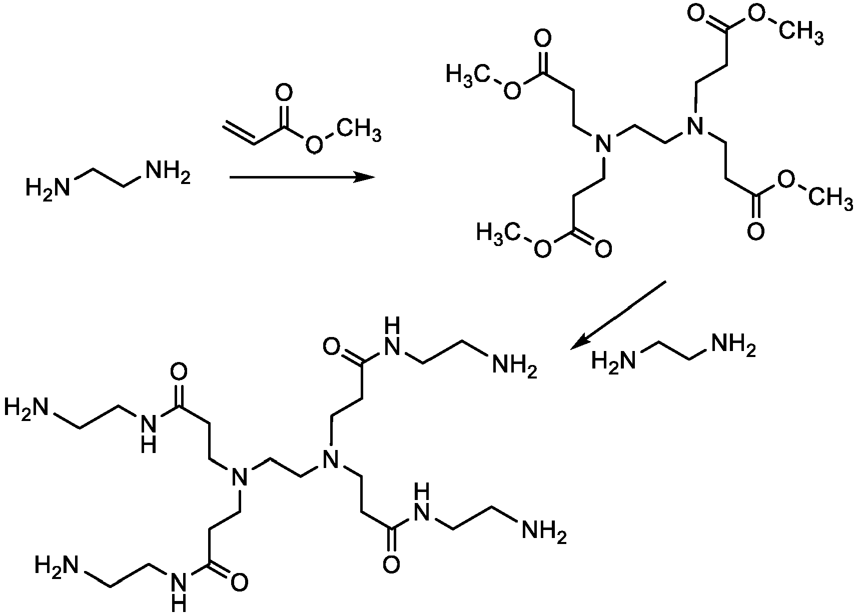

Other suitable polyamines include phenalkamines, which are made by a Mannich reaction between cardanol, formaldehyde and at least one polyamine.

In a preferred embodiment, the at least one polyamine comprises or consists of a mixture of a triamine of approximately 3000 molecular weight, of the formula: 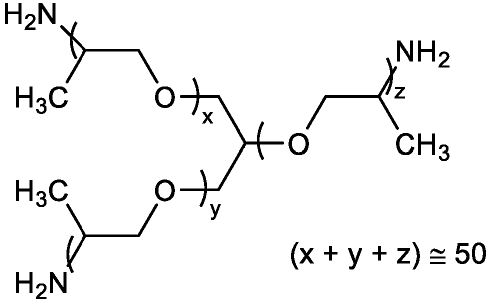 and a polyetheramine triamine of approximately 440 molecular weight, of the following general structure:

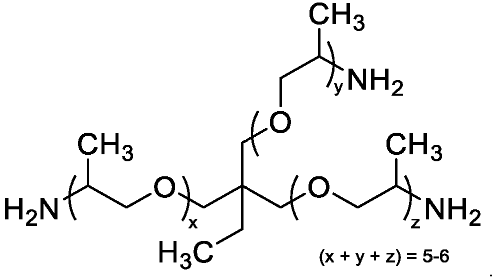

The at least one polyamine is preferably present in Part B at 8-30 wt%, more preferably 10-20 wt%, more particularly preferably 12-16 wt%, based on the total weight of Part B.

The at least one polyamine is preferably present in Part B at 80-99 wt%, more preferably 85-95 wt%, particularly preferably 87-92 wt%, based on the organic content of Part B.

In a preferred embodiment, the at least one polyamine comprises or consists of a polyether triamine or mixture of polyether triamines, used in Part B at 8-30 wt%, more preferably 10-20 wt%, more particularly preferably 12-16 wt%, based on the total weight of Part B.

In another preferred embodiment, the at least one polyamine comprises or consists of a mixture of a polyether triamine of approximately 3,000 Da and a polyether triamine of approximately 440 Da, used in Part B at 8-30 wt%, more preferably 10-20 wt%, more particularly preferably 12-16 wt%, based on the total weight of Part B.

In a preferred embodiment, the at least one polyamine comprises or consists of a polyether triamine or mixture of polyether triamines, used in Part B at 80-99 wt%, more preferably 85-95 wt%, particularly preferably 87-92 wt%, based on the organic content of Part B.

In another preferred embodiment, the at least one polyamine comprises or consists of a mixture of a polyether triamine of approximately 3,000 Da and a polyether triamine of approximately 440 Da, used in Part B at 80-99 wt%, more preferably 85-95 wt%, particularly preferably 87-92 wt%, based on the organic content of Part B.

### At least one catalyst

At least one of Part A and Part B comprises a catalyst capable of catalyzing the reaction of an amine with a compound of general Formula I.

The catalyst is preferably selected from tertiary amine catalysts.

Examples of suitable tertiary amines include 2,4,6-*tris-*(dimethylaminomethyl)phenol, tetramethylguanidine, heptamethylisobiguanide, N,N-dimethylbenzylamine, and 1,4-Diazabicyclo[2.2.2]octane.

In a preferred embodiment, the catalyst is 2,4,6-*tris-*(dimethylaminomethyl)phenol.

In another preferred embodiment, the catalyst is 1,4-Diazabicyclo[2.2.2]octane.

In a preferred embodiment, the catalyst is a mixture of 2,4,6-*tris-*(dimethylaminomethyl)phenol and 1,4-Diazabicyclo[2.2.2]octane.

The catalyst may be present in Part A and/or Part B. In a preferred embodiment, it is present in Part B.

The catalyst is preferably used at 0.05-0.75 wt%, more preferably 0.1-0.6 wt%, more particularly preferably 0.45-0.55 wt%, based on the total weight of Part B.

In a preferred embodiment, the catalyst comprises or consists of 2,4,6*-tris-*(dimethylaminomethyl)phenol, used at 0.2 to 0.8 w%, more preferably 0.3 to 0.5 wt%, based on the total weight of Part B

In another preferred embodiment, the catalyst comprises or consists of 1,4-Diazabicyclo[2.2.2]octane, used at 0.02-0.35 wt%, more preferably 0.05-0.15 wt%, based on the total weight of Part A.

In a particularly preferred embodiment, the catalyst comprises or consists of a mixture of 2,4,6-*tris*-(dimethylaminomethyl)phenol and 1,4-Diazabicyclo[2.2.2]octane, comprising 0.2 to 0.8 w%, more preferably 0.3 to 0.5 wt% 2,4,6-*tris*-(dimethylaminomethyl)phenol, and 0.02-0.35 wt%, more preferably 0.05-0.15 wt% 1,4-Diazabicyclo[2.2.2]octane, based on the total weight of Part B.

### Optional ingredients

The adhesive compositions of the invention may optionally comprise a plasticizer, which may be present in Part A or B or both. Examples of plasticizers are esters, in particular diesters and triesters, particularly those having vapour pressures of < 10⁻⁴ hPa at 23°C. Examples include dialkyl phthalate esters, alkyl esters of fatty acids, phosphate esters (such as trioctyl phosphate). Diisononylphthalate is particularly preferred. If used, the plasticizer is typically present at 10 to 20 wt%, preferably 12 to 18 wt%, based on the total weight of the adhesive composition. In a particularly preferred embodiment, diisononylphthalate is used at 12 to 18 wt%, more preferably at 16-17 wt%, based on the total weight of the adhesive composition.

The adhesive compositions of the invention may optionally comprise fillers, in addition to any thermally-conductive fillers, which may be present in Part A or B or both, such as carbon black, clay, carbonates (e.g. calcium carbonate), metal hydrates and fumed silica. The fillers are preferably used at from 0-10 wt%, preferably 1-6 wt%, more preferably 2-5 wt%, based on the total weight of the relevant Part.

In a preferred embodiment, the adhesives of the invention comprise carbon black as filler. The carbon black is not particularly limited. Preferred carbon blacks exhibit an oil absorption number of at least 80, preferably at least 90 and more preferably at least 95 cm³ of dibutyl phthalate per 100 g of carbon black, as measured according to ASTM D-2414-09. In addition, the carbon black desirably has an iodine number of at least 80, determined according to ASTM D1510-11.

If used, carbon black is used at 5-30 wt%, more preferably 15 to 25 wt%, based on the total weight of the adhesive composition. In a particularly preferred embodiment, carbon black is used at 15 to 25 wt%, preferably 22 to 23 wt%, based on the total weight of the adhesive composition.

The adhesive compositions of the invention may optionally comprise calcium carbonate in Part A and/or Part B at 0-5 wt%, more preferably 1 to 3 wt%, particularly preferably 1.5-2.5 wt%, based on the total weight of the relevant Part. The calcium carbonate particles may be untreated or surface modified by treatment with chemicals, such as organic acids or esters of organic acids.

The adhesive compositions of the invention may optionally comprise fumed silica at 0-1.5 wt%, more preferably 0.5 to 1 wt%, based on the total weight of the adhesive.

If fumed silica is used, the particles may be untreated or surface modified by treatment with chemicals, such as chlorosilane, dichlorosilane, alkyltrialkoxysilane or polydimethylsiloxane.

The adhesive composition of the invention may optionally comprise talc, which may be present in Component A or B or both. In a preferred embodiment, talc is used in Component B at 25 to 40 wt%, more preferably30 to 35 wt%, based on the total weight of Component B.

The adhesive composition of the invention may optionally comprise adhesion promoters, which may be present in Component A or B or both. Suitable adhesion promoters include silanes, such as Gamma-Glycidoxypropyltrimethoxysilane. In a preferred embodiment, Gamma-Glycidoxypropyltrimethoxysilane is used in Part A, at 0.1 to 1 wt%, preferably 0.3-0.6 wt%, based on the total weight of Part A.

The adhesive compositions of the invention may optionally comprise flame-retardants and synergists. Examples of suitable flame-retardants and synergists include:
1. aluminium, zinc and titanium salts of diethylphosphinate, in particular aluminium diethylphosphinate;
2. nitrogen and/or phosphorus containing molecules, such as melamine polyphosphate, melamine pyrophosphate, melamine cyanurate;
3. aluminium and/or zinc phosphites

A preferred combination of flame-retardants/synergists is aluminium diethylphosphinate plus melamine polyphosphate.

The adhesive compositions of the invention may optionally comprise one or more additional stabilizers, for example heat, visible light and UV-stabilizers.

Examples of heat stabilizers include alkyl substituted phenols, phosphites, sebacates and cinnamates. If present, a preferred heat stabilizer is an organophosphite and more specifically trisnonylphenyl phosphite as disclosed in U.S. Pat. No. 6,512,033. The heat stabilizer may constitute at least 0.01 or at least 0.3 weight percent based on the entire weight of the adhesive composition, up to at most 5 weight percent, up to 2 weight percent or up to 1.0 weight percent. The adhesive composition may be devoid of such a heat stabilizer.

For UV light stabilizers, they include benzophenones and benzotriazoles. Specific UV light absorbers include those from BASF such as TINUVIN^{™} P, TINUVIN^{™} 326, TINUVIN^{™} 213, TINUVIN^{™} 327, TINUVIN^{™} 571, TINUVIN^{™} 328, and from Cytec such as CYASORB^{™} UV-9, CYASORB^{™} UV-24, CYASORB^{™} UV-1164, CYASORB^{™} UV-2337, CYASORB^{™} UV-2908, CYASORB^{™} UV-5337, CYASORB^{™} UV-531, and CYASORB^{™} UV-3638. Among these, TINUVIN^{™} 571 is preferred. One or more UV light absorbers may constitute at least 0.1 weight percent, at least 0.2 weight percent or at least 0.3 parts by weight of the weight of the adhesive composition, and may constitute up to 3 weight percent, up to 2 weight percent or up to 1 weight percent thereof.

The adhesive composition of the invention may further include one or more visible light stabilizers. Preferred visible light stabilizers included hindered amine visible light stabilizers such as TINUVIN^{™} 144, TINUVIN^{™} 622, TINUVIN^{™} 77, TINUVIN^{™} 123, TINUVIN^{™} 765, CHIMASSORB^{™} 944 available from Cytec; CYASORB^{™} UV-500, CYASORB^{™} UV-3581, CYASORB^{™} UV-3346, all available from Ciba-Geigy. Among these, TINUVIN^{™} 765 is preferred choice. The visible light stabilizer(s) may constitute at least 0.1 weight percent, at least 0.2 weight percent or at least 0.3 weight percent of the adhesive composition, and may constitute up to 3 weight percent, up to 2 weight percent or up to 1.5 weight percent thereof.

### Method of manufacture of adhesive composition

Part A and Part B are made by mixing the ingredients, preferably on a planetary mixer or on a dual asymmetric centrifuge. In a first phase the liquid phases are mixed before the solid material is added to the formulation. The formulation was mixed for ca 30 min under vacuum before being filled into cartridges, pails, or drums. The two Parts are stored separately until use, at which point they are mixed.

### Method of use

The application describes a method for adhering two substrates, comprising the steps:
(1) providing a two-part, thermally-conductive adhesive comprising:
   (A) a first part (Part A) comprising:
      (a1) at least one compound of general Formula I: 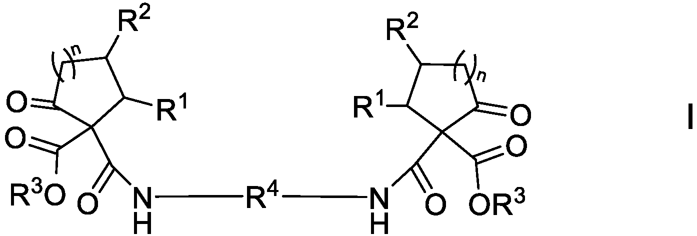
      where R¹ and R² are independently selected from hydrogen and C₁ to C₆ alkyl, n is an integer from 1 to 2, R³ is C₁ to C₆ alkyl, and R⁴ is a divalent C₄₋₈-alkylene radical with 2-5 C₁₋₃-alkyl substituents on the akylene chain;
      (a2) at least one liquid epoxy resin;
   (B) a second part (Part B) comprising:
      (b1) at least one polyamine, having two or more primary or secondary amine functionalities;
   wherein at least one of Part A and Part B comprises a thermally-conductive filler such that when Part A and Part B are mixed to form an adhesive mixture, the concentration of thermally-conductive filler in the adhesive mixture is 70 wt% or greater, and wherein at least one of Part A and Part B comprise a catalyst capable of catalyzing the reaction of an amine with a compound of general Formula I, and wherein Part A and Part B are stored isolated from one another, and are designed to be mixed together to form an adhesive mixture prior to use;
(2) mixing Part A and Part B to produce an adhesive mixture;
(3) applying the adhesive mixture to the first substrate;
(4) bringing the second substrate into adhesive contact with the first substrate; and
(5) allowing the adhesive mixture to cure.

As mentioned above, a preferred way of providing the adhesive of the invention is in airtight containers, such as airtight sealed tubes. The containers are opened immediately prior to use, and the two Parts are mixed.

Part A and Part B may be mixed in any ratio. In a preferred embodiment, the ratio of Part A to Part B is 0.5:1 to 1:0.5 (v:v), more preferably 1:1.5 to 1.5:1 (v:v), particularly preferably 1:1 (v:v).

The adhesive composition of the invention may be applied by any application method, manually or with robotic equipment, including, for example, by spreading, application through a nozzle.

In a preferred embodiment one or both of the first and second substrates are selected from aluminium, glass, steel, in particular aluminium, more particularly untreated aluminium, e-coated metal (Al, steel), powder coated metal, other coated metal, passivated aluminum, or plastic coated metal, plastics such as poly(ethyleneterephthalate), polyethylene, polypropylene, polyamide, polyimide, polycarbonate, particularly preferably aluminium.

Curing is carried out by allowing the adhered assembly to sit at room temperature. Full cure is typically observed after 1-2 days, but a 7 day cure period is often used.

### EXAMPLES

| **Table 1. Ingredients** | |
|---|---|
| **Trademark or abbreviation** | **Chemistry** |
| MDI | Methylene diphenyl diisocyanate |
| HDI | Hexamethylene diisocyanate |
| IPDI | Isophorone diisocyanate |
| TMDI | 2,4,4-trimethyl-hexamethylene diisocyanate |
| Voranol 1010L | polypropyleneoxide based polyether diol from Dow with a molecular weight of 1,000 Da |
| Voranol 2000L | polypropyleneoxide based polyether diol from Dow with a molecular weight of 2,000 Da |
| Catalyst TIB 718 | Modified Bi catalyst |
| CPEE | ethyl 2-oxocyclopentane-1-carboxylate |
| DER 330 | Liquid epoxy resin that is a reaction product of epichlorohydrin and bisphenol A, having an epoxide equivalent weight of 176-185 g/eq (according to ASTM D-1652), an epoxide percentage of 23.2-24.4 % (according to ASTM D-1652), an epoxide group content of 5,400-5,680 mmol/kg (according to ASTM D-1652), and a viscosity @ 25°C of 7,000-10,000 MPas (according to ASTM D-445) |
| Silquest A187 | Gamma-glycidoxypropyltrimethoxysilane |
| ATH (bimodal) | Bimodal aluminium trihydroxide (ATH), having the following particle size distribution: |
| | D₁₀ 0.5 µm |
| | D₅₀ 8 µm |
| | D₉₀ 80 µm |
| | As measured by laser diffraction using acetone as the suspending medium |
| CaCO₃ | |
| MEFA | methyl ester of unsaturated C₁₆-C₁₈ fatty acid. |
| Tris(2-ethylhexyl)phosphate | Tris(2-ethylhexyl)phosphate |
| Hexadecyltrimethoxysilane | Hexadecyltrimethoxysilane |
| CAPA 2201 | Polycaprolactone diol |
| Desmodur E21 | An aromatic polyisocyanate prepolymer based on diphenylmethane diisocyanate (MDI) and poly(propylene glycol) |
| | Equivalent weight of 251-274 g/eq |
| | Functionality: approximately 2.8 |
| Isonate M143 | A modified diphenylmethane diisocyanate containing a high percentage of pure |
| | diphenylmethanediisocyanate, and a lesser amount of polycarbodiimide adducts |
| p-toluenesulfonyl isocyanate | p-toluenesulfonyl isocyanate |
| Irganox 1520 | 4,6-Bis(octylthiomethyl)-o-cresol |
| CaO | CaO |
| Jeffamine T-3000 | A polyetheramine triamine of approximately 3000 molecular weight, of the following general structure: 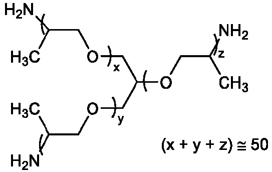 |
| Jeffamine T-403 | A polyetheramine triamine of approximately 440 molecular weight, of the following general structure: 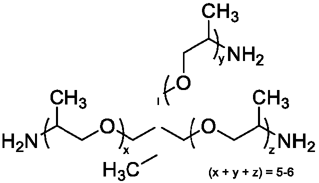 |
| tris-2,4,6-dimethylaminomethyl phenol | tris-2,4,6-dimethylaminomethyl phenol |
| DABCO LV33 | 33 % 1,4-diazabicyclo[2.2.2]octane in dipropylene glycol |
| Voranol CP755 | A glycerine initiated homopolymer polyether triol with an average molecular weight of 700 |
| Voranol CP260 | Glycerine-initiated polypropylene oxide triol with an average molecular weight of 260 Da |
| Fomrez UL38 | Dioctyltin dineodecanoate |
| Dynasilan 9116 | hexadecyltrimethoxysilane |
| Calofort SV | Precipitated calcium carbonate |
| TEHP | tris(2-ethylhexyl)phosphate |
| Ancamine K54 | tris-2,4,6-dimethylaminomethyl phenol |
| Cardolite NX-2026 | Cardanol |
| DABCO T-12N | dibutyltin dilaurate |
| Isonate M143 | Modified diphenylmethane diisocyanate containing a high percentage of pure diphenylmethanediisocyanate, and a lesser amount of polycarbodiimide adducts |
| PTSI | p-Toluenesulfonyl isocyanate |
| Voranol CP755 | a glycerine initiated homopolymer polyether triol with an average molecular weight of 700 Da |
| Voranol 1010L | a polypropyleneoxide based polyether diol with a molecular weight of 1,000 |
| Voranol 2000L | a polypropyleneoxide based polyether diol with a molecular weight of 2,000 Da |
| Irganox 1520L | 4,6-Bis(octylthiomethyl)-o-cresol |
| HDI | Hexamethylene-1,6-diisocyanate |
| TMDI | 2,4,4-trimethyl-hexamethylene diisocyanate |
| CPEE | ethyl 2-oxocyclopentane-1-carboxylate |
| TiB 718 | Modified Bi catalyst |

### GF210 and GF213 prepolymer preparation (conventional, CPEE-capped prepolymer)

Using the quantities listed in Table 3, the following procedure was carried out: Voranol 1010 was added to a lab reactor and heated under stirring and vacuum to 130°C. When the temperature was reached, the mixture was cooled down with stirring to 70°C. The vacuum was broken and HDI was added. The mixture was stirred for two minutes under nitrogen, and the bismuth catalyst (TiB 718) was added. The mixture was allowed to react for 45 minutes under stirring and nitrogen at 85°C bath temperature. The mixture was then cooled to 60°C under stirring and nitrogen. The CPEE was added, and the mixture was allowed to react for 45 minutes under stirring and nitrogen at 85°C bath temperature. The isocyanate content was checked, and when 0, the mixture was stirred for an additional 20 minutes under vacuum at 85°C. The prepolymer was stored under inert atmosphere until use.

### CPEE-functionalized diisocyanate preparation (GF216, GF217, GF 218, GF219)

Using the quantities listed in Table 2, the following procedure was carried out: The diisocyanate and bismuth catalyst (TiB 718) were added to a lab reactor and mixed under nitrogen at 23°C. The CPEE was added portion-wise, taking care that the temperature did not exceed 60°C. After all the CPEE was added the mixture was stirred under vacuum at bath temperature 70°C for 45 minutes. The CPEE-functionalized diisocyanates were stored under inert atmosphere until use.

| **Table 2. Ingredients in CPEE-functionalised prepolymers (GF210, GF213) and CPEE-functionalised diisocyanates (GF216, GF217, GF218, GF219)** | | | | | | |
|---|---|---|---|---|---|---|
| | **GF210 (CPEE-prepolymer)** | **GF213 (CPEE-prepolymer)** | **GF216 (MDI-CPEE)** | **GF217 (HDI-CPEE)** | **GF218 (IPDI-CPEE)** | **GF219 (TMDI-CPEE)** |
| **Ingredient** | | | | | | |
| MDI (wt%) | -- | -- | 46.7 | -- | -- | -- |
| HDI (wt%) | 19.87 | 12.57 | -- | 33.8 | -- | -- |
| IPDI (wt%) | -- | -- | -- | -- | 40.3 | -- |
| TMDI (wt%) | -- | -- | -- | -- | -- | 39.0 |
| Voranol 1010 (wt%) | 60.03 | 74.57 | -- | -- | -- | -- |
| Catalyst (TiB 718) (wt%) | 0.52 | 0.50 | 0.1 | 0.1 | 0.1 | 0.1 |
| CPEE (wt%) | 19.58 | 12.36 | 53.2 | 66.1 | 59.6 | 60.9 |
| | | | | | | |

| **Characteristics** | | | | | | |
|---|---|---|---|---|---|---|
| Viscosity at 23°C (Pas) | 14 | 12 | Solid | Solid | 310 | 5 |
| Mₙ (Da) | 3400 | 6900 | 900 | 537 | 456 | 393 |
| M_{W} (Da) | 4200 | 8400 | 4200 | 570 | 509 | 429 |
| Polydispersity index (PDI) | 1.3 | 1.2 | 4.9 | 1.06 | 1.117 | 1.09 |

### Discussion of CPEE-functionalised molecules

When MDI is functionalised with CPEE (GF216), the resulting product is solid at room temperature. This is undesirable for a monomer for an adhesive. The same is true when HDI is functionalised with CPEE (GF217).

When IPDI is functionalised with CPEE (GF218), the result is a liquid, however the viscosity at 23°C is high (310 Pa.s), making it inappropriate for use as a monomer for an adhesive.

When 2,4,4-trimethylhexamethylene diisocyanate is functionalised with CPEE, the result is a tractable liquid of suitable viscosity for use as a monomer for an adhesive.

### Adhesive formulations

Using the ingredients listed in Table 3, the formulations were mixed on a planetary mixer or on a dual asymmetric centrifuge. In a first phase the liquid phases were mixed before the solid material was added to the formulation.

The formulation was mixed for ca 30 min under vacuum before being filled into cartridges, pails, or drums.

| **Table 3. Comparative (CE1, CE2, CE4, CE5) and Inventive (IE1) adhesives of the invention and performance characteristics** | | | | | |
|---|---|---|---|---|---|
| | **CE1** | **CE2** | **CE4** | **CE5** | **IE1** |
| | PU prepolymer | PU prepolymer + epoxy | TMDI-CPEE without epoxy | CPEE-capped polyol + HDI prepolymer | TMDI-CPEE with epoxy |
| **Ingredient (wt%)** | | | | | |
| **A component (isocyanate or equivalent)** | | | | | |
| GF219 (TMDI-CPEE) | -- | -- | 15.75 | -- | 15.75 |
| GF213 | -- | -- | -- | 15.75 | -- |
| DER 330 | -- | -- | -- | 6 | 6 |
| Silquest A187 (epoxy silane) | 0.5 | 0.5 | 0.5 | 0.5 | 0.5 |
| ATH (bimodal) | 77.85 | 77.85 | 78.5 | 72 | 74.5 |
| CaCO₃ | 2 | 2 | 2 | 2 | 2 |
| MEFA | 2 | 2 | 1 | -- | -- |
| Tris(2-ethylhexyl)phosphate | 2 | 2 | 1 | -- | -- |
| Green colour | 0.1 | 0.1 | 0.1 | 0.1 | 0.1 |
| hexadecyltrimethoxysilane | 1 | 1 | 1 | 1 | 1 |
| CAPA 2201 (polyester polyol) | 0.15 | 0.15 | 0.15 | 0.15 | 0.15 |
| Desmodur E21¹ | 9.26 | 9.26 | -- | -- | -- |
| Isonate M143 | 4.64 | 4.64 | -- | -- | -- |
| *p*-toluenesulfonyl isocyanate | 0.5 | 0.5 | -- | -- | -- |
| Irganox 1520 | -- | -- | -- | 0.5 | -- |
| CaO | -- | -- | -- | 2 | -- |
| | | | | | |

| **Results-A component** | | | | | |
|---|---|---|---|---|---|
| Viscosity at 10s/s at 23°C (Pas) | 220 | 220 | 245 | 303 | 334 |
| Viscosity at 10s/s at 23°C after 2 w RT storage (Pas) | 406 | 406 | 285 | 349 | |
| | | | | | |

| **B component (hardener)** | | | | | |
|---|---|---|---|---|---|
| Jeffamine T-3000 | -- | -- | 8.6 | 11.91 | 8.6 |
| Jeffamine T-403 | -- | -- | 6.07 | 2.76 | 6.07 |
| MEFA | 0.5 | 0.5 | -- | -- | -- |
| Tris(2-ethylhexyl)phosphate | 0.5 | 0.5 | -- | -- | -- |
| hexadecyltrimethoxysilane | 1 | 1 | 1 | 1 | 1 |
| ATH (bimodal) | 81.47 | 80.47 | 81.68 | 81.68 | 81.68 |
| CaCO₃ | 2 | 2 | 2 | 2 | 2 |
| Tris-2,4,6-dimethylaminomethyl phenol | -- | -- | 0.4 | 0.4 | 0.4 |
| DABCO LV33 | -- | -- | 0.1 | 0.1 | 0.1 |
| CAPA 2201 (polyester polyol) | 0.15 | 0.15 | 0.15 | 0.15 | 0.15 |
| Voranol CP755 | 14.37 | 6.56 | -- | -- | -- |
| Voranol CP260 | -- | 2.81 | -- | -- | -- |
| Fomrez UL38 | 0.01 | 0.01 | -- | -- | -- |
| DER 330 | -- | 6 | -- | -- | -- |
| | | | | | |

| **Results-B component** | | | | | |
|---|---|---|---|---|---|
| Viscosity at 10s/s at 23°C (Pas) | 146 | 277 | 165 | 83 | 127 |
| | | | | | |

| **Results A + B 1:1 v:v** | | | | | |
|---|---|---|---|---|---|
| Thermal conductivity (W/mK) | 1.3 | -- | 2.0 | 1.6 | 1.8 |
| Lap shear strength (MPa) | 2.8 | 3.0 | 0.3 | 3.7 | 5.6 |
| Lap shear failure mode (aluminium) | 100% AF | 100% AF | 100% AF | 100% CF | 100% CF |
| Tensile strength (MPa) | 1.7 | -- | -- | 3.4 | 2.0 |
| E-modulus (MPa) | 10.6 | -- | -- | 40 | 24 |
| Elongation at break (%) | 27 | -- | -- | 17 | 27 |

| | | | | | |
|---|---|---|---|---|---|
| ¹ An NCO-terminated prepolymer based on diphenylmethane diisocyanate (MDI) and poly(propylene glycol), with equivalent weight of 251-274 g/eq, and a functionality of approximately 2.8 | | | | | |

### Test methods

### Viscosity

Rheology measurements were performed on an Anton Paar MC 302 rheometer with a parallel plate geometry. 25 mm diameter plates were used, the gap was fixed at 0.5 mm. The material is brought between the two plates and then a shear rate test was performed from 0.001 to 20 1/s. The viscosity at 10 s⁻¹ is reported.

### Press-in Force

The press-in force is measured with a tensiometer (Zwick). The material is placed on a metal surface. An aluminium piston with 40 mm diameter is placed on top and the material is compressed to 5 mm (initial position). The material is then compressed to 0.3 mm with 1 mm/s velocity and a force deflection curve is recorded. The force (N) at 0.5 mm thickness is considered as the press-in force, and is reported in Table 3.

### Thermal conductivity

Thermal conductivity is measured according to ASTM 5470-12 on a thermal interface material tester from ZFW Stuttgart. The tests are performed in Spaltplus mode at a thickness of between 1.8-1.2 mm. The material is considered as Type I (viscous liquids) as described in ASTM 5470-12. The upper contact is heated to ca 40°C and the lower contact to ca 10°C, resulting in a sample temperature of ca 25°C. The A and B component are mixed with a static mixer when applied from a manual cartridge system.

### GPC

Molecular Weight data of the polyurethane prepolymers were measured by gel permeation chromatography (GPC) with a Malvern Viscothek GPC max equipment. EMSURE - THF (ACS , Reag. Ph EUR for analysis) was used as an eluent, PL GEL MIXED D ( Agilent , 300*7.5 mm , 5 µm ) was used as a column, and MALVERN Viscotek TDA was used as a detector .

### Lap shear strength

Aluminium substrates (from Novelis, AA6061 T6 1.92mm MF noPT no lub) (140 x 25 mm, 1.9 mm thick) were used. The substrates were cleaned with isopropanol before use. The adhesive was applied on one substrate, and the second substrate was joined within 5 minutes. The thickness was adjusted to 1.0 mm, the overlap area was 25 mm x 25 mm. The material was cured and rested for 7 days at 23°C, 50 % relative humidity, before the lap shear tests were performed. The lap shear samples were then mounted in a tensiometer and the lap shear tests were performed using a pull speed of 10 mm/min. The force deflection curve was recorded and the strength at break was reported as lap shear strength.

### NCO content

NCO measurements were performed according to ASTM D2572 - 97 (Reapproved 2010) (GEX081). This test method is applicable for liquids containing isocyanates. There are included monomers (e.g. methylendiphenyldiisocyanate MDI), prepolymers and adhesive formulations. The isocyanate (NCO) sample reacts with an excess of dibutylamine to form the corresponding urea. The NCO content was determined from the amount of dibutylamine consumed in the reaction. The result is reported as percent NCO (weight percent).

### Results

As mentioned above, it can be seen from the results in Table 2, of the diisocyanates tested, only the branched aliphatic diisocyanate, TMDI, yielded a reaction product with CPEE that was a liquid with suitable viscosity to be used as a "prepolymer".

From the data in Table 3, it can be seen that the highest lap shear strength was obtained when a molecule of general Formula I (TMDI-CPEE) was used in Part A (IE1), in combination with a liquid epoxy resin (DER 330). In contrast, a conventional polyurethane prepolymer (Desmodur E21, see CE1 and CE2), gave significantly lower lap shear strength both with (CE2) and without epoxy (CE1).

Inventive example 1 also shows a good thermal conductivity of 1.8, showing that it is possible to have high loadings of thermally-conductive filler while not compromising lap shear strength.

## Claims

1. A two-part, thermally-conductive adhesive comprising:
(A) a first part (Part A) comprising:
(a1) at least one compound of general Formula I: 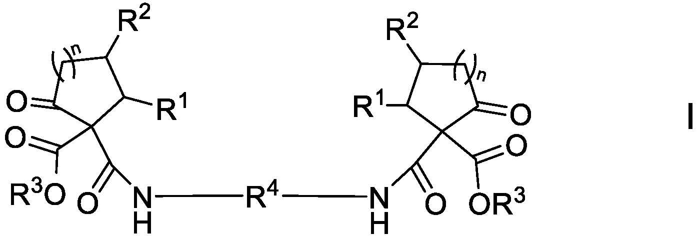
where R¹ and R² are independently selected from hydrogen and C₁ to C₆ alkyl, n is an integer from 1 to 2, R³ is C₁ to C₆ alkyl, and R⁴ is a divalent C₄₋₈-alkylene radical with 2-5 C₁₋₃-alkyl substituents on the akylene chain;
(a2) at least one liquid epoxy resin;
(B) a second part (Part B) comprising:
(b1) at least one polyamine, having two or more primary or secondary amine functionalities;
wherein at least one of Part A and Part B comprises a thermally-conductive filler such that when Part A and Part B are mixed to form an adhesive mixture, the concentration of thermally-conductive filler in the adhesive mixture is 70 wt% or greater, based on the total weight of the adhesive mixture, and wherein at least one of Part A and Part B comprise a catalyst capable of catalyzing the reaction of an amine with a compound of general Formula I, and wherein Part A and Part B are stored isolated from one another, and are designed to be mixed together to form an adhesive mixture prior to use.

2. The adhesive of claim 1, wherein R¹ and R² are independently selected from hydrogen and C₁ to C₆ alkyl, n is an integer from 1 to 2, R³ is C₁ to C₆ alkyl, and R⁴ is a divalent C₄₋₈-alkylene radical with 2-5 C₁₋₃-alkyl substituents on the akylene chain.

3. The adhesive of any of claims 1 to 2, wherein R¹ and R² are independently selected from H and C₁ to C₄ alkyl.

4. The adhesive of any one of claims 1 to 3, wherein n is 1.

5. The adhesive of any one of claims 1 to 4, wherein R³ is C₁ to C₄ alkyl.

6. The adhesive of any one of claims 1 to 5, wherein R⁴ is a divalent C₆ alkylene radical with 2-5 methyl substituents on the alkylene chain, or wherein R⁴ is a C₆ alkylene radical with three methyl substituents on the alkylene chain.

7. The adhesive of any of claims 1 to 6, wherein the compound of general Formula I is of Formula I":

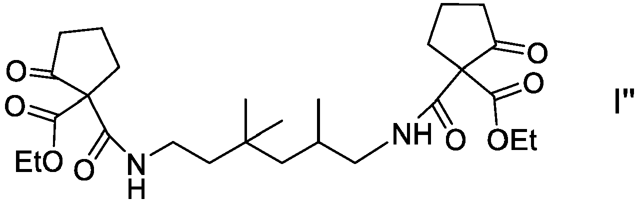

8. The adhesive of any of claims 1 to 7, wherein the at least one liquid epoxy resin has an average of at least 1.8 epoxide groups per molecule, and/or wherein the liquid epoxy resin is present at 2-20 wt%, based on the total weight of Part A.

9. The adhesive of any of claims 1 to 8, wherein the at least one epoxy resin comprises a reaction product of epichlorohydrin and bisphenol A.

10. The adhesive of any of claims 1 to 9, wherein Part A and/or Part B comprise a thermally-conductive filler, and wherein the thermally-conductive filler is selected from aluminium trihydroxide (ATH), and aluminium oxide.

11. The adhesive of any one of claims 1 to 10, wherein Part A and/or Part B comprise a thermally-conductive filler, and wherein the thermally-conductive filler has a bimodal particle size distribution.

12. The adhesive of any one of claims 1 to 11, wherein Part A and/or Part B comprise a thermally-conductive filler, and the thermally-conductive filler is bimodally distributed aluminium trihydroxide (ATH), used at a concentration of 30-85 wt%, based on the total weight of the adhesive.

13. The adhesive of any one of claims 1 to 12, wherein the at least one polyamine comprises a polyamine having a molecular weight of at least 400 Da, preferably of 2,000-4,000 Da, measured by gel permeation chromatography.

14. The adhesive of any one of claims 1 to 13, wherein the at least one polyamine comprises a mixture of a triamine having a molecular weight of 400-450 Da, measured by gel permeation chromatography, and a triamine having a molecular weight of approximately 3,000 Da, measured by gel permeation chromatography.

15. The adhesive of any one of claims 1 to 14, where the catalyst is selected from tertiary amine catalysts.

## Patentansprüche

1. Wärmeleitender Zweikomponenten-Klebstoff, umfassend:
(A) eine erste Komponente (Komponente A), umfassend:
(a1) mindestens eine Verbindung der allgemeinen Formel I: 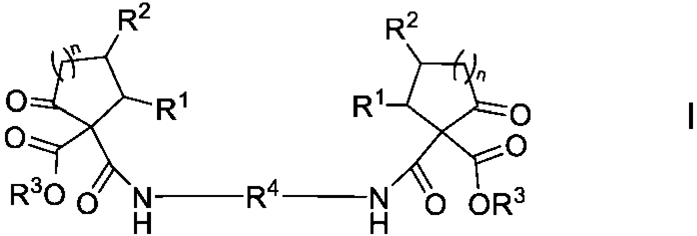
wobei R¹ und R² unabhängig voneinander ausgewählt sind aus Wasserstoff und C₁ bis C₆ Alkyl, n eine ganze Zahl von 1 bis 2 ist, R³ C₁ bis C₆ Alkyl ist und R⁴ ein zweiwertiges C₄₋₈-Alkylenradikal mit 2-5 C₁₋₃-Alkyl-Substituenten an der Alkylenkette ist;
(a2) mindestens ein flüssiges Epoxidharz;
(B) eine zweite Komponente (Komponente B), umfassend:
(b1) mindestens ein Polyamin mit zwei oder mehr primären oder sekundären Aminfunktionlitäten;
wobei mindestens eine von Komponente A und Komponente B einen wärmeleitenden Füllstoff umfasst, sodass die Konzentration des wärmeleitenden Füllstoffs in der Klebstoffmischung nach dem Mischen von Komponente A und Komponente B 70 Gew.-%, oder mehr bezogen auf das Gesamtgewicht der Klebstoffmischung, beträgt, und wobei mindestens eine von Komponente A und Komponente B einen Katalysator umfasst, der die Reaktion eines Amins mit einer Verbindung der allgemeinen Formel I katalysieren kann, und wobei Komponente A und Komponente B voneinander getrennt gelagert werden und dafür ausgelegt sind, vor der Verwendung zu einer Klebstoffmischung vermischt zu werden.

2. Klebstoff nach Anspruch 1, wobei R¹ und R² unabhängig voneinander ausgewählt sind aus Wasserstoff und C₁ bis C₆ Alkyl, n eine ganze Zahl von 1 bis 2 ist, R³ C₁ bis C₆ Alkyl ist und R⁴ ein zweiwertiges C₄₋₈-Alkylenradikal mit 2-5 C₁₋₃-Alkyl-Substituenten an der Alkylenkette ist.

3. Klebstoff nach einem der Ansprüche 1 oder 2, wobei R¹ und R² unabhängig voneinander ausgewählt sind aus H und C₁ bis C₄ Alkyl.

4. Klebstoff nach einem der Ansprüche 1 bis 3, wobei n gleich 1 ist.

5. Klebstoff nach einem der Ansprüche 1 bis 4, wobei R³ ein C₁ bis C₄ Alkyl ist.

6. Klebstoff nach einem der Ansprüche 1 bis 5, wobei R⁴ ein zweiwertiges C₆ Alkylenradikal mit 2-5 Methyl-Substituenten an der Alkylenkette ist, oder wobei R⁴ ein C₆ Alkylenradikal mit drei Methyl-Substituenten an der Alkylenkette ist.

7. Klebstoff nach einem der Ansprüche 1 bis 6, wobei die Verbindung der allgemeinen Formel I der Formel I" entspricht:

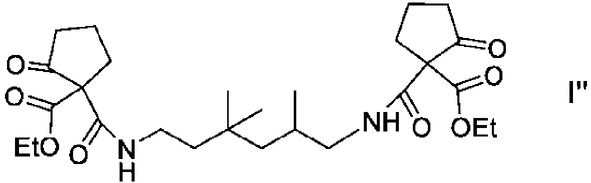

8. Klebstoff nach einem der Ansprüche 1 bis 7, wobei das mindestens eine flüssige Epoxidharz im Durchschnitt mindestens 1,8 Epoxidgruppen pro Molekül aufweist, und/oder wobei das flüssige Epoxidharz in einer Konzentration von 2-20 Gew.-%, bezogen auf das Gesamtgewicht von Komponente A, vorliegt.

9. Klebstoff nach einem der Ansprüche 1 bis 8, wobei das mindestens eine Epoxidharz ein Reaktionsprodukt von Epichlorhydrin und Bisphenol A umfasst.

10. Klebstoff nach einem der Ansprüche 1 bis 9, wobei Komponente A und/oder Komponente B einen wärmeleitenden Füllstoff umfasst, wobei der wärmeleitende Füllstoff ausgewählt ist aus Aluminiumtrihydroxid (ATH) und Aluminiumoxid.

11. Klebstoff nach einem der Ansprüche 1 bis 10, wobei Komponente A und/oder Komponente B einen wärmeleitenden Füllstoff umfasst, und wobei der wärmeleitende Füllstoff eine bimodale Partikelgrößenverteilung aufweist.

12. Klebstoff nach einem der Ansprüche 1 bis 11, wobei Komponente A und/oder Komponente B einen wärmeleitenden Füllstoff umfasst und der wärmeleitende Füllstoff bimodal verteiltes Aluminiumtrihydroxid (ATH) ist, das in einer Konzentration von 30-85 Gew.-%, bezogen auf das Gesamtgewicht des Klebstoffs, eingesetzt wird.

13. Klebstoff nach einem der Ansprüche 1 bis 12, wobei das mindestens eine Polyamin ein Polyamin mit einem Molekulargewicht von mindestens 400 Da, vorzugsweise von 2.000-4.000 Da, gemessen mittels Gelpermeationschromatographie, umfasst.

14. Klebstoff nach einem der Ansprüche 1 bis 13, wobei das mindestens eine Polyamin eine Mischung aus einem Triamin mit einem Molekulargewicht von 400-450 Da, gemessen mittels Gelpermeationschromatographie, und einem Triamin mit einem Molekulargewicht von etwa 3.000 Da, gemessen mittels Gelpermeationschromatographie, umfasst.

15. Klebstoff nach einem der Ansprüche 1 bis 14, wobei der Katalysator aus tertiären Aminkatalysatoren ausgewählt ist.

## Revendications

1. Adhésif thermoconducteur à deux parties, comprenant :
(A) une première partie (Partie A), comprenant :
(a1) au moins un composé de formule générale I : 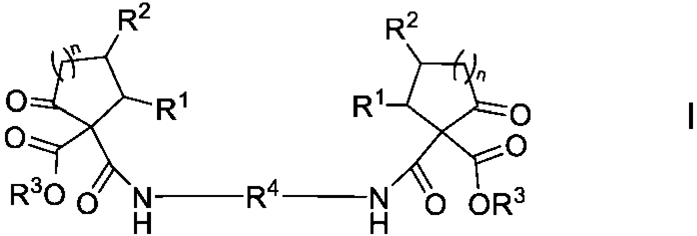
où R¹ et R² sont sélectionnés indépendamment parmi l'hydrogène et l'alkyle en C₁ à C₆, n est un entier de 1 à 2, R³ est un alkyle en C₁ à C₆ et R⁴ est un radical alkylène en C₄₋₈ divalent avec 2-5 substituants d'alkyle en C₁₋₃sur la chaîne alkylène ;
(a2) au moins une résine époxy liquide ;
(B) une seconde partie (Partie B), comprenant :
(b1) au moins une polyamine, présentant deux ou plusieurs fonctions amines primaires ou secondaires ;
dans lequel au moins une parmi la Partie A et la Partie B comprend une charge thermoconductrice de sorte que, lorsque la Partie A et la Partie B sont mélangées pour former un mélange adhésif, la concentration de charge thermoconductrice dans le mélange adhésif est de 70 % en poids ou plus, par rapport au poids total du mélange adhésif, et dans lequel au moins une parmi la Partie A et la Partie B comprend un catalyseur capable de catalyser la réaction d'une amine avec un composé de formule générale I, et dans lequel la Partie A et la Partie B sont stockées séparément l'une de l'autre et sont conçues pour être mélangées ensemble afin de former un mélange adhésif avant utilisation.

2. Adhésif selon la revendication 1, dans lequel R¹ et R² sont sélectionnés indépendamment parmi l'hydrogène et l'alkyle en C₁ à C₆, n est un entier de 1 à 2, R³ est un alkyle en C₁ à C₆ et R⁴ est un radical alkylène en C₄₋₈ divalent avec 2-5 substituants d'alkyle en C₁₋₃ sur la chaîne alkylène.

3. Adhésif selon l'une quelconque des revendications 1 à 2, dans lequel R¹ et R² sont indépendamment sélectionnés parmi H et l'alkyle en C₁ à C₄.

4. Adhésif selon l'une quelconque des revendications 1 à 3, dans lequel n est égal à 1.

5. Adhésif selon l'une quelconque des revendications 1 à 4, dans lequel R³ est un alkyle en C₁ à C₄.

6. Adhésif selon l'une quelconque des revendications 1 à 5, dans lequel R⁴ est un radical alkylène en C₆ divalent avec 2 à 5 substituants méthyle sur la chaîne alkylène, ou dans lequel R⁴ est un radical alkylène en C₆ avec trois substituants méthyle sur la chaîne alkylène.

7. Adhésif selon l'une quelconque des revendications 1 à 6, dans lequel le composé de formule générale I est de formule I" :

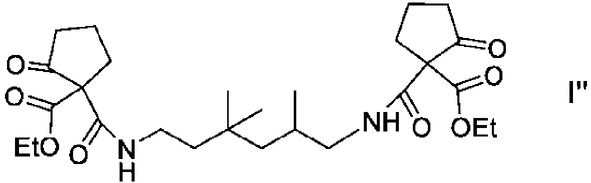

8. Adhésif selon l'une quelconque des revendications 1 à 7, dans lequel la au moins une résine époxy liquide présente en moyenne au moins 1,8 groupe époxyde par molécule, et/ou dans lequel la résine époxy liquide est présente à 2-20 % en poids, par rapport au poids total de la partie A.

9. Adhésif selon l'une quelconque des revendications 1 à 8, dans lequel la au moins une résine époxy comprend un produit de réaction d'épichlorhydrine et de bisphénol A.

10. Adhésif selon l'une quelconque des revendications 1 à 9, dans lequel la Partie A et/ou la partie B comprend une charge thermoconductrice, et dans lequel la charge thermoconductrice est choisie parmi le trihydroxyde d'aluminium (ATH) et l'oxyde d'aluminium.

11. Adhésif selon l'une quelconque des revendications 1 à 10, dans lequel la partie A et/ou la partie B comprend une charge thermoconductrice, et dans lequel la charge thermoconductrice présente une distribution granulométrique bimodale.

12. Adhésif selon l'une quelconque des revendications 1 à 11, dans lequel la Partie A et/ou la partie B comprend une charge thermoconductrice, et la charge thermoconductrice est constituée de trihydroxyde d'aluminium (ATH) à distribution bimodale, utilisé à une concentration de 30 à 85 % en poids par rapport au poids total de l'adhésif.

13. Adhésif selon l'une quelconque des revendications 1 à 12, dans lequel la au moins une polyamine comprend une polyamine présentant un poids moléculaire d'au moins 400 Da, de préférence de 2 000 à 4 000 Da, mesuré par chromatographie par perméation de gel.

14. Adhésif selon l'une quelconque des revendications 1 à 13, dans lequel la au moins une polyamine comprend un mélange d'une triamine présentant un poids moléculaire de 400 à 450 Da, mesuré par chromatographie par perméation de gel, et d'une triamine présentant un poids moléculaire d'environ 3 000 Da, mesuré par chromatographie par perméation de gel.

15. Adhésif selon l'une quelconque des revendications 1 à 14, dans lequel le catalyseur est choisi parmi des catalyseurs d'amine tertiaire.
